# EUROPÄISCHE PATENTSCHRIFT

(11) **EP 2 839 767 B1**
(45) Veröffentlichungstag und Bekanntmachung des Hinweises auf die Patenterteilung: **26.10.2016**
(21) Anmeldenummer: 14178863.8
(22) Anmeldetag: 29.07.2014
(51) Int. Cl.: A47J 43/044

(54) **Küchengerät mit Schwenkarm und Sicherungseinrichtung**
Kitchen appliance with a pivoting arm, and a safety device
Ustensile de cuisine doté d'un bras pivotant et d'une sécurité

(30) Priorität: 14.08.2013 DE 102013216087
(43) Veröffentlichungstag der Anmeldung: 25.02.2015
(73) Patentinhaber: BSH Hausgeräte GmbH, 81739 München (DE)
(72) Erfinder: Brecko, Ales, 3000 Celje (SI); Cater, Matej, 3301 Petrovce (SI); Strojansek, Aleksander, 3331 Nazarje (SI)

(56) Entgegenhaltungen:
- WO-A1-2011/147675
- DE-A1- 2 930 533
- DE-A1- 3 308 781

## Beschreibung

Die Erfindung betrifft ein Küchengerät gemäß des Oberbegriffs des Anspruchs 1.

### Hintergrund der Erfindung

Die WO 2011/147675 A1 zeigt und beschreibt ein Küchengerät mit einem Grundkörper und einem Schwenkarm, der in einer Lagerstelle schwenkbar am Grundkörper angeordnet ist. Dabei ist vorgesehen, dass das Küchengerät eine Hebeleinrichtung zum Unterstützen einer Schwenkbewegung des Schwenkarms aufweist. Damit der Schwenkarm nicht aus einer Betriebsstellung geschwenkt werden kann, weist das Küchengerät eine Sicherung oder eine Fixierungseinrichtung des Schwenkarms auf. Die Sicherung gleicht somit ein Drehmoment aus, und das Küchengerät kann in der Betriebsstellung sicher betrieben werden. Die Sicherung des Schwenkarms kann beispielsweise mittels eines auf dem Schwenkarm angeordneten Bedienknopfes, der wahlweise auch an einer geeigneten Stelle am Grundkörper des Küchengeräts angeordnet sein kann, aktiviert werden.

Aus der Offenlegungsschrift WO 2012/025430 A1 ist ein Küchengerät bekannt, das ähnlich ausgeführt ist. Es umfasst einen Grundkörper, einen Schwenkarm, der schwenkbar am Grundkörper angeordnet ist und eine Hebeleinrichtung zum Unterstützen einer Schwenkbewegung des Schwenkarms. Dabei sind Mittel zum Justieren der Hebeleinrichtung offenbart, um das Maß des Unterstützerts der Schwenkbewegung einzustellen. Auf diese Weise kann ein gleichbleibendes Maß an Unterstützung trotz herstellungsbedingten und/oder montagebedingten Toleranzen, die zu unterschiedlichen Funktionsverhalten der verwendeten Bauteile führen können, gewährleistet werden.

Eine weitere Offenlegungsschrift DE 29 30 533 A1 offenbart ebenfalls ein Küchengerät mit einem Grundkörper und einem Schwenkarm, der über eine Lagerachse schwenkbar am Grundkörper angelenkt ist. Eine Sicherungseinrichtung, die dafür eingerichtet ist, ein Schwenken des Schwenkarms relativ zum Grundkörper zu unterbinden, weist ein Sperrelement als Bestandteil der Sicherungseinrichtung auf, das entlang der Lagerachse translatierbar ist. Das Sperrelement soll ein verschwenken des Schwenkarms aus einer gewählten Stellung relativ zum Grundkörper unterbinden.

Noch eine weitere Offenlegungsschrift DE 33 08 781 A1 offenbart auch eine Küchenmaschine mit einem Grundkörper, einem Schwenkarm, der über eine Lagerachse schwenkbar am Grundkörper angelenkt ist, und einer/einem Arretierungsvorrichtung, die dafür eingerichtet sind, ein Schwenken des Schwenkarms relativ zum Grundkörper zu unterbinden.

### Der Erfindung zugrundeliegende Aufgabe

Der Erfindung liegt die Aufgabe zugrunde, ein Küchengerät zu schaffen, das gegenüber dem Stand der Technik verbessert ist. Insbesondere soll ein Küchengerät geschaffen werden, bei dem auf einfache Weise eine Sicherungseinrichtung, die dafür eingerichtet ist, ein Schwenken des Schwenkarms relativ zum Grundkörper zu unterbinden, bereitgestellt werden kann. Die Sicherungseinrichtung soll insbesondere möglichst preiswert und einfach herzustellen sein, ohne dass dafür wesentliche Änderungen an der Gestaltung des Grundkörpers oder am Schwenkarm des Küchengeräts vorgenommen werden müssen.

### Ertindungsgemäße Lösung

Die Bezugszeichen in sämtlichen Ansprüchen haben keine einschränkende Wirkung, sondern sollen lediglich deren Lesbarkeit verbessern.

Die der Erfindung zugrundeliegende Aufgabe wird durch ein Küchengerät mit einem Grundkörper, einem Schwenkarm, der über eine Lagerachse schwenkbar am Grundkörper angelenkt ist, und einer Sicherungseinrichtung, die dafür eingerichtet ist, ein Schwenken des Schwenkarms relativ zum Grundkörper zu unterbinden, gelöst, bei dem vorgesehen ist, dass ein Sperrelement als Bestandteil der Sicherungseinrichtung entlang der Lagerachse translatierbar ist. Seitens des Grundkörpers ist ein Betätigungsknopf zum Betätigen des Sperrelements vorgesehen. Ein Betätigungsknopf kann die Benutzerfreundlichkeit eines derartig ausgestatteten Küchengeräts verbessern, denn der Benutzer muss dann nicht umständlich unmittelbar an dem Sperrelement hantieren, um es zu betätigen, sondern kann mittelbar die Stellung des Sperrelementes über den Betätigungsknopf beeinflussen. Zudem kann ein solcher Betätigungsknopf ästhetisch in die äußere Form des Küchengerätes eingebunden werden. Alternativ ist der Betätigungsknopf zum Betätigen des Sperrelements am Schwenkarm des Küchengeräts vorgesehen. Vorzugsweise wirkt der Betätigungsknopf auf das Sperrelement mittels einer linearen Translation ein. Eine derartige Konstruktion ist mechanisch sehr einfach umsetzbar, sodass Störungen im Betätigungsweg zwischen Betätigungsknopf und Sperrelement unwahrscheinlich sind und auf relativ teurer elektronische Betätigungsmittel verzichtet werden kann. Dabei weist das Sperrelement einen Anschlag auf, um eine maximale Translationsstrecke des Sperrelements zu begrenzen. Dies kann die Benutzerfreundlichkeit eines Küchengeräts mit einer solchen Sicherungseinrichtung vereinfachen, da herstellerseitig festgelegt werden kann, welche Translationsstrecke maximal notwendig und sinnvoll ist, um das Sperrelement in eine Sperrposition zu translatieren, so dass es seine Sperrwirkung entfaltet. So ist für den Benutzer jederzeit klar, dass, sofern eine maximale Translationsstrecke durchlaufen worden ist, das Sperrelement sich tatsächlich in der gewünschten Sperrposition befindet.

Ein Küchengerät im Sinne der vorliegenden Erfindung ist eine elektrisch oder mechanisch antreibbare Standküchenmaschine, insbesondere eine Universalküchenmaschine. Das Küchengerät ist zur Bearbeitung von Nahrungsmitteln vorgesehen und umfasst zu diesem Zweck Bearbeitungswerkzeuge für Nahrungsmittel, beispielsweise zum Mixen, Kneten, Häckseln, Schneiden, Pürieren oder Entsaften, oder Kupplungen zur Aufnahme solcher Bearbeitungswerkzeuge.

Der Grundkörper des Küchengeräts ist im Sinne dieser Erfindung das Element des Küchengeräts, das im Betriebszustand des Küchengeräts auf einer Unterlage, wie beispielsweise einer Küchenarbeitsplatte, abgestellt ist, also mit ihr über Standfüße, beispielsweise an einer Bodenwand, oder auch direkt über eine Bodenwand in Kontakt steht.

Der Schwenkarm ist im Sinne dieser Erfindung das Element des Küchengeräts, an dem Bearbeitungswerkzeuge angebracht sind oder mittels Kupplungen angebracht werden können. Ein Schwenkarm kann ein oder mehrere Bearbeitungswerkzeuge und/oder Kupplungen aufweisen. Der Schwenkarm ist gegenüber dem Grundkörper verschwenkbar und am Grundkörper angeordnet.

Die Lagerachse ist im Sinne der vorliegenden Erfindung die Rotationsachse mittels derer der Schwenkarm mit dem Grundkörper verbunden ist und um die der Schwenkarms gegenüber dem Grundkörper verschwenkt werden kann.

Unterbinden bedeutet im Sinne der Erfindung, dass das Schwenken des Schwenkarmes durch die Sicherungseinrichtung verhindert werden soll, sofern dies vom Benutzer gewünscht ist. Dies kann beispielsweise dann der Fall sein, wenn der Benutzer den Schwenkarm in eine Betriebsposition gebracht hat und ein selbstständiges Verschwenken aus der Betriebsposition heraus verhindern möchte.

Ist ein Sperrelement als Bestandteil der Sicherungseinrichtung entlang der Lagerachse translatierbar, so kann dies den Vorteil haben, dass ein solches Sperrelement sehr einfach bereitgestellt werden kann. So kann das Sperrelement zwischen einer Schwenkstellung und einer Sperrstellung translatiert werden. Als Schwenkstellung im Sinne der Erfindung ist die Stellung des Sperrelements definiert, in dem das Verschwenken des Schwenkarms des Küchengeräts gegenüber dem Grundkörper durch das Sperrelement nicht unterbunden wird. In dieser Stellung ist das Sperrelement also bezogen auf seine Sperrfunktion inaktiv. Als Sperrstellung des Sperrelements ist im Sinne der Erfindung jene Stellung des Sperrelements zu verstehen, in der das Schwenken des Schwenkarms des Küchengeräts durch das Sperrelement unterbunden wird. In der Sperrstellung ist das Schwenken des Schwenkarms relativ zum Grundkörper also unterbunden. Befindet sich das Sperrelement in der Sperrstellung, so ist das Sperrelement aktiv.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Vorzugsweise umgibt das Sperrelement die Lagerachse abschnittsweise koaxial. Auf diese Weise kann das Sperrelement relativ groß dimensioniert sein, was aufgrund der zu erwartenden hohen Kräfte, die vom Sperrelement aufgenommen werden müssen, von Vorteil sein kann. Vorzugsweise kann das Sperrelement bezogen auf die Lagerachse frei rotieren. Es ist also vorzugsweise nicht drehfest in Bezug auf die Lagerachse ausgeführt, sondern drehfest gegenüber dem Grundgehäuse des Küchengeräts. Auf diese Weise kann eine Betätigung des Sperrelements auf einfachere Weise ermöglicht werden, weil die relative Lage des Sperrelements bezogen auf das Grundgerät nicht von der Rotationsstellung der Lagerachse abhängt. Bevorzugt ist, dass das Sperrelement mehr als 30% einer Gesamtlänge der Lagerachse koaxial umgibt. Dann kann sichergestellt sein, dass das Sperrelement nicht verkippt. Besonders vorzugsweise umgibt das Sperrelement aus diesem Grund mehr als 50% der Gesamtlänge der Lagerachse.

Es ist bevorzugt, dass das Sperrelement an der Lagerachse gelagert ist. Komplexe zusätzliche Lagermechanismen für das Sperrelement, beispielsweise seitens des Schwenkarms oder des Grundkörpers des Küchengeräts, können entfallen, sodass ein Sperrelement kostengünstig in dem Küchengerät untergebracht werden kann. Dies kann eine kostengünstige und einfache Herstellung eines Küchengeräts mit einer Sicherungseinrichtung, die dafür eingerichtet ist, ein Schwenken des Schwenkarms relativ zum Grundkörper zu unterbinden, ermöglichen.

Vorzugsweise ist das Sperrelement durch ein elastisches Element vorgespannt. Besonders vorzugsweise ist das Sperrelement in die Sperrstellung vorgespannt. Allerdings verhindert besonders vorzugsweise ein Halteelement seitens der Sicherungseinrichtung, dass das in die Sperrstellung vorgespannte Sperrelement die Sperrstellung auch einnimmt, solange der Benutzer das Sperrelement nicht betätigt. Durch Betätigen des Sperrelements löst sich vorzugsweise das Sperrelement, besonders vorzugsweise ruckartig, aus der Schwenkstellung und wird durch die Vorspannung von dem elastischen Element in die Sperrstellung entlang der Lagerachse in Richtung des Schwenkarms translatiert.

Vorzugsweise ist das elastische Element eine Schraubenfeder, die die Lagerachse und das Sperrelement jeweils abschnittsweise koaxial umgibt. So kann eine sehr platzsparende und einfache Lagerung für das elastische Element bereitgestellt werden. Es muss keine Lagerung am Grundkörper oder am Schwenkarm des Küchengeräts erfolgen, sodass die Herstellung eines entsprechend ausgestatteten Küchengeräts auf einfache Weise möglich ist.

Bevorzugt ist, dass der Anschlag mit einer Führungsaussparung wechselwirkt, die seitens des Grundkörpers vorgesehen ist. Eine derartige Führungsaussparung kann sicherstellen, dass das Sperrelement bezüglich des Grundkörpers immer die gleiche Ausrichtung aufweist, unabhängig davon, in welcher Rotationsposition sich die Lagerachse des Schwenkarms befindet. Vorzugsweise wirkt die Führungsaussparung also sowohl in als auch quer zur Translationsrichtung des Sperrelements. So kann eine versehentliche Korotation zwischen Lagerachse und Sperrelement besonders vorteilhaft unterbunden werden. Eine bevorzugte Führungsaussparung ist in Form eines in einer Aufsicht senkrecht zur Lagerachse rechteckigen Spalts vorgesehen. Ein in diesem Fall bevorzugter Anschlag seitens des Sperrelements ist in Form einer Rastnase, die als Anschlag fungiert, ausgebildet. Eine derartige Rastnase kann einfach hergestellt werden, beispielsweise durch Anspritzen am Sperrelement.

Besonders bevorzugt ist, dass der Betätigungsknopf ein einfacher Druckknopf ist; der senkrecht zu einer Außenwand des Grundkörpers in den Grundkörper hineinverlagert werden kann und durch diese lineare Translation auf das Sperrelements betätigend einwirkt.

Vorzugsweise ist der Betätigungsknopf in einem Betätigungsgehäuse angeordnet, durch das die Lagerachse verläuft. Ein Betätigungsgehäuse ist vorzugsweise als separates Element des Grundkörpers ausgeführt. So kann es getrennt vom übrigen Grundkörper hergestellt und dann im Zuge des Produktionsprozesses mit dem Grundkörper verbunden werden, beispielsweise durch Verschrauben oder Vergeben. Verläuft gleichzeitig, wie bevorzugt, die Lagerachse ebenfalls durch das Betätigungsgehäuse, so kann im Bereich des Betätigungsgehäuses besonders vorteilhaft eine Interaktion zwischen Betätigungsknopf und Sperrelement stattfinden, das an der Lagerachse gelagert ist.

In einer bevorzugten Ausführungsform ist die Lagerachse in einem Kugellager gegenüber dem Grundkörper drehbar gelagert. Besonders bevorzugt ist, dass das Kugellager in einem Betätigungsgehäuse angeordnet ist. So kann es gemeinsam mit dem Betätigungsgehäuse bereitgestellt werden. Das Betätigungsgehäuse mit dem Kugellager, das relativ komplex in der Herstellung sein kann, kann also separat von dem übrigen Grundkörper produziert werden, der seinerseits hingegen sehr einfach herstellbar sein kann. So können komplexere und einfachere Produktionsschritte an unterschiedlichen Standorten vorgenommen werden und die jeweils separat gefertigten Teile dann an einem Ort zusammengerührt werden, Statt einem Kugellager kommt in anderen Ausführungsformen ein Gleitlager zum Einsatz. Ein Gleitlager kann kostengünstiger sein. Vorzugsweise weist das Sperrelement einen oder mehrere Blockadebereiche auf, die dafür eingerichtet sind, in einer Sperrstellung mit Angriffsbereichen des Schwenkarms zu wechselwirken. In einigen Ausführungsformen ist nur ein einziger Blockadebereich vorgesehen. Da in einem Küchengerät mit einem Schwenkarm aufgrund des hohen Gewichts des Schwenkarms, insbesondere wenn daran Werkzeuge zur Nahrungsmittelbearbeitung angebracht sind, große Kräfte beim Schwenken des Schwenkarms auftreten können, sind jedoch vorzugsweise zwei oder mehr Blockadebereiche seitens des Sperrelements vorgesehen, um eine sichere und stabile Sperrwirkung erreichen zu können, die das Schwenken des Schwenkarms relativ zum Grundkörper unterbinden kann. Besonders bevorzugt ist es, dass das Sperrelement vier Blockadebereiche aufweist, die in gleichen Abständen zueinander angeordnet sind.

Bevorzugt ist, dass das Sperrelement einen ersten Abschnitt und einen zweiten Abschnitt umfasst, wobei der erste Abschnitt ringförmig ausgebildet ist und an dem ersten Abschnitt radial abstehende Blockadebereiche angeordnet sind, und der erste Abschnitt koaxial den zweiten Abschnitt umgibt, der als Führungshülse für die Lagerachse ausgebildet ist, wobei radiale Streben den ersten Abschnitt und den zweiten Abschnitt drehfest miteinander verbinden. Ein solches Sperrelement kann durch Spritzgießen einfach hergestellt werden. Vorzugsweise sind der erste Abschnitt und der zweite Abschnitt einteilig geformt. Es ist jedoch auch möglich, den ersten Abschnitt und den zweiten Abschnitt als separate Teile herzustellen und diese beispielsweise über eine Steck- oder Schraubverbindung miteinander zu verbinden. Vorzugsweise sind vier radial abstehende Blockadebereiche am ersten Abschnitt vorhanden, die in gleichen Winkelabständen zueinander angeordnet sind. Die Blockadebereiche haben vorzugsweise eine quaderförmige Gestalt.

Vorzugsweise ist an der Lagerachse eine Hebeleinrichtung angeordnet, eine Schwenkbewegung des Schwenkarms zu unterstützen. Eine solche Hebeleinrichtung ist vorzugsweise an einem ersten Ende der Lagerachse angeordnet und aus der WO 2011/147675 A1 bereits bekannt. Dieses Dokument ist durch Zitat hinsichtlich der Ausgestaltung und der Wirkweise der Hebeleinrichtung zum Unterstützen einer Schwenkbewegung des Schwenkarms Teil der vorliegenden Offenbarung. Durch die Kombination von einem Sperrelement, das bezogen auf die Lagerachse translatierbar gelagert ist, und einer Hebeleinrichtung zum Unterstützen der Schwenkbewegung des Schwenkarms kann es möglich sein, die Schwenkbewegung durch eine sehr große Kraft seitens der Hebeleinrichtung zu unterstützen, und andererseits die Schwenkbewegung mittels eines stabilen und trotzdem günstigen Sperrelement wie dem erfindungsgemäß vorgeschlagenen vorteilhaft auf Wunsch unterbinden zu können.

Vorzugsweise ist an der Lagerachse ein im Wesentlichen stabförmiges Kraftübertragungsmittel angeordnet, um eine Kraft auf den Schwenkarm zu übertragen. Ein derartiges Kraftübertragungsmittel ist vorzugsweise an einem zweiten Ende der Lagerachse angeordnet, das von einem ersten Ende der Lagerachse beabstandet ist, an dem eine Hebeleinrichtung angeordnet ist. Ein stabförmiges Kraftübertragungsmittel kann die Kraftübertragung zwischen Lagerachse und Schwenkarm verbessern und erleichtern. So kann der Vorteil erreicht werden, dass das Drehmoment, das durch die Lagerachse erzeugt wird, besser auf den Schwenkarm übertragen werden kann, sodass dieser leichtgängiger verschwenkbar ist. Zudem kann eine relativ große Angriffsfläche eines stabförmigen Kraftübertragungsmittels verschleißärmer sein im Vergleich zu der kleinen Umfangslinie der Lagerachse, die ansonsten zur Kraftübertragung auf den Schwenkarm genutzt werden müsste. Eine Flächennormale eines bevorzugten stabförmigen Kraftübertragungsmittels verläuft parallel zur Drehachse der Lagerachse. Besonders bevorzugt ist, dass die Lagerachse den geometrischen Mittelpunkt des stabförmigen Kraftübertragungsmittels durchstößt. Das Kraftübertragungsmittel und die Lagerachse bilden somit im Querschnitt vorzugsweise eine T-Form. So kann eine Unwucht reduziert oder ganz verhindert werden. Vorzugsweise ist das Kraftübertragungsmittel an Halterungen, die am Gehäuse des Schwenkarms angeschraubt sind, festgelegt. Diese Halterungen können aus einem besonders stabilen Material sein, sodass eine sichere Kraftübertragung von der Lagerachse auf den Schwenkarm ermöglicht wird.

### Kurzbeschreibung der Zeichnungen

Weitere vorteilhafte Ausgestaltungen der Erfindung werden nachfolgend anhand von in den Zeichnungen dargestellten Ausführungsbeispielen, auf welche die Erfindung jedoch nicht beschränkt ist, näher beschrieben. Es zeigen schematisch:
Figur 1 einen Längsschnitt durch ein erfindungsgemäßes Küchengerät;
Figur 2 einen Kraftübertragungsweg für ein erfindungsgemäßes Küchengerät, beginnend an einer Hebeleinrichtung seitens des Grundkörpers des Küchengeräts und endend an einem stabförmigen Kraftübertragungsmittel seitens des Schwenkarms des Küchengeräts;
Figur 3 eine Detailansicht eines erfindungsgemäßen Küchengerätes, bei dem sich eine Sicherungseinrichtung in einem Zustand befindet, in dem sich ein Sperrelement in einer Schwenkposition befindet; und
Figur 4 einen vergrößerten Ausschnitt aus einem erfindungsgemäßen Küchengerät, bei dem sich eine Sicherungseinrichtung in einem Zustand befindet, bei dem sich ein Sperrelement in einer Sperrposition befindet.

### Detaillierte Beschreibung von Ausführungen der Erfindung

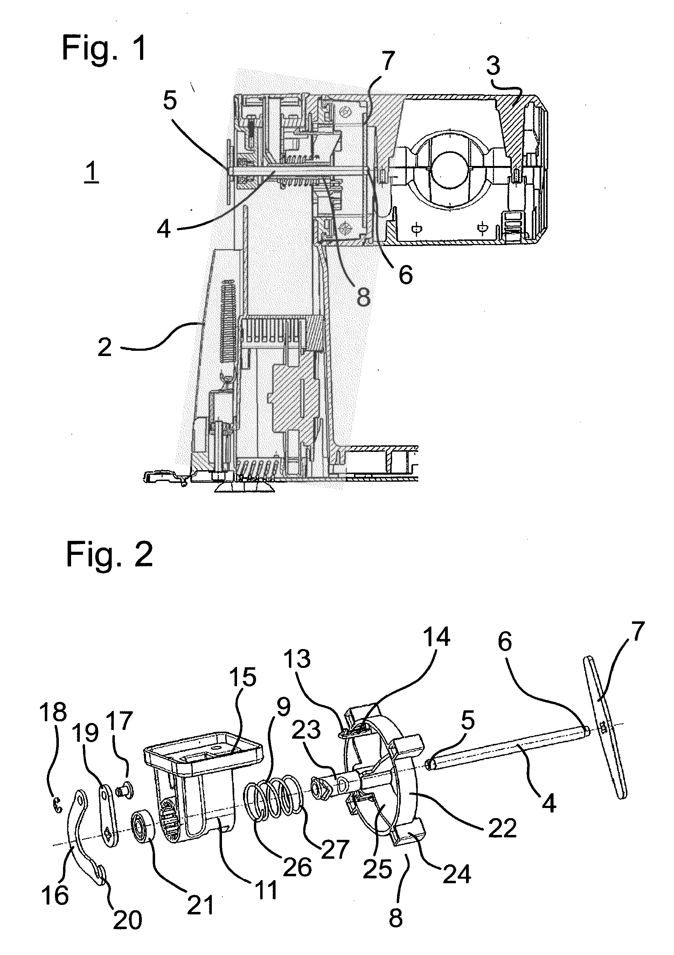

Die Figuren 1 bis 4 zeigen ein erfindungsgemäßes Küchengerät 1 oder Elemente, die für ein erfindungsgemäßes Küchengerät 1 von besonderer Bedeutung sein können.

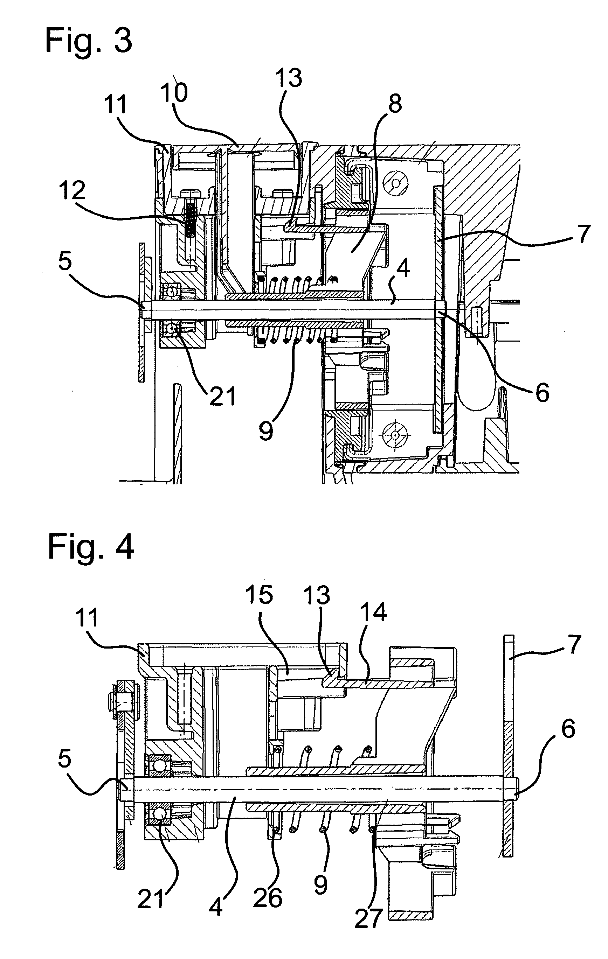

Figur 1 zeigt einen Längsschnitt durch ein erfindungsgemäßes Küchengerät 1. Es umfasst einen Grundkörper 2 und einen Schwenkarm 3. Der Schwenkarm 3 ist über eine Lagerachse 4 schwenkbar am Grundkörper 2 angelenkt. Wie insbesondere auch in den Figuren 3 und 4 zu erkennen ist, ist an einem ersten Ende 5 der Lagerachse 4 eine Hebeleinrichtung angeordnet, die dafür eingerichtet ist, eine Schwenkbewegung des Schwenkarms 3 zu unterstützen. An einem zweiten Ende 6 der Lagerachse 4 ist ein im Wesentlichen stabförmiges Kraftübertragungsmittel 7 angeordnet, um eine Kraft auf den Schwenkarm 3 zu übertragen. Die Kraft, die seitens des ersten Endes 5 auf die Lagerachse 4 ausgeübt werden kann, wird also über die Lagerachse 4 an das zweite Ende 6 der Lagerachse 4 übermittelt und dort über das stabförmige Kraftübertragungsmittel 7 an den Schwenkarm 3 übergeben, so dass der Schwenkarm 3 kraftunterstützt relativ zum Grundkörper 2 verschwenkt werden kann, wie es vom Prinzip her aus der WO 2011/147675 A1 bereits bekannt ist.

Das Küchengerät 1 weist eine Sicherungseinrichtung auf, die dafür eingerichtet ist, das Schwenken des Schwenkarms 3 relativ zum Grundkörper 2 zu unterbinden, wie in den Figuren 2 bis 4 im Detail zu erkennen ist. Als Bestandteil dieser Sicherungseinrichtung ist ein Sperrelement 8 vorgesehen, das entlang der Lagerachse 4 des Schwenkarms 3 translatierbar ist, was sich insbesondere aus den Figuren 3 und 4 erschließt. Das Sperrelement 8 umgibt die Lagerachse 4 koaxial und ist an der Lagerachse 4 gelagert. Dabei ist das Sperrelement 8 durch ein elastisches Element 9 in eine Sperrstellung, in der das Schwenken des Schwenkarms 3 unterbunden ist, vorgespannt. Das Sperrelement 8 nimmt diese allerdings erst ein, sofern das Sperrelement 8 betätigt wird, also der Benutzer das Unterbinden der Schwenkbewegung des Schwenkarms 3 wünscht. Bis dahin befindet sich das Sperrelement 8 in einer Schwenkstellung, in der das kraftunterstützte Verschwenken des Schwenkarms 3 möglich ist. Figur 3 zeigt einen Schnitt durch das Küchengerät 1, bei dem sich das Sperrelement 8 in der Schwenkstellung befindet. Figur 4 zeigt einen Schnitt durch das Küchengerät 1, bei dem sich das Sperrelement 8 in der Sperrstellung befindet. Das Sperrelement 8 ist durch die Translation entlang der Lagerachse 4 von der Schwenkstellung in die Sperrstellung übergegangen. Das elastische Element 9 ist eine Schraubenfeder, die die Lagerachse 4 und das Sperrelement 8 jeweils abschnittsweise koaxial umgibt. Insbesondere umgibt das Sperrelement 8 in diesem Fall die Lagerachse 4 abschnittsweise koaxial und gleichzeitig umgibt das elastische Element 9 im gleichen Abschnitt das Sperrelement 8 abschnittsweise koaxial.

Um das Sperrelement 8 betätigen zu können, ist seitens des Grundkörpers 2 des Küchengeräts 4 ein Betätigungsknopf 10 vorgesehen. Er ist in einem Betätigungsgehäuse 11 angeordnet, das separat ausgeführt ist und durch Verschrauben mittels mehrerer Schrauben 12 an dem Grundkörper 2 befestigt ist, wie speziell in Figur 3 zu erkennen ist. Der Betätigungsknopf 10 wirkt mittels einer linearen Translation auf das Sperrelement 8 ein, so dass durch Betätigen des Betätigungsknopfes 10 das Sperrelement 8 aus einer Schwenkstellung in die Sperrstellung übergeht. Um dabei eine maximale Translationsstrecke des Sperrelements 8 zu begrenzen, weist das Sperrelement 8 einen Anschlag 13 auf. Der Anschlag 13 entspricht von der Form her einer Rastnase, die über einen Verbindungssteg 14 an dem Sperrelement 8 befestigt ist. Der Anschlag 13 wechselwirkt mit einer Führungsaussparung 15, die seitens des Grundkörpers 2 vorgesehen ist. In diesem Fall ist die Führungsaussparung 15 im Betätigungsgehäuse 11 angebracht und hat im Wesentlichen eine rechteckige Form, die geeignet ist, den Anschlag 13 zu blockieren und somit nach einer maximalen Translationsstrecke die Translation des Sperrelements 8 zu stoppen. Zudem stabilisiert die Führungsaussparung 15 das Sperrelement 8 senkrecht zur Translationsstrecke, um eine Korotation zwischen Sperrelement 8 und Lagerachse 4 wirksam zu verhindern.

Figur 2 zeigt in einer Detailansicht die Ausgestaltung des Kraftübertragungszugs zwischen Hebeleinrichtung und Kraftübertragungsmittel 7. Die Hebeleinrichtung umfasst zwei miteinander verbundene Hebelarme. Der erste Hebelarm 16 ist über eine Hülse 17 mit Spannring 18 am zweiten Hebelarm 19 angelenkt und kann um diese Verbindung frei rotieren. Ein Haken 20 am ersten Hebelarm 16 kann beispielsweise eine Schraubenfeder als kraftgebendes Mittel aufnehmen, so dass von dem kraftgebenden Mittel über die Hebeleinrichtung eine Kraft auf die Lagerachse 4 übertragen werden kann. Zu diesem Zweck ist der zweite Hebelarm 19 drehfest am ersten Ende 5 der Lagerachse 4 angenietet. Die Lagerachse 4 selbst verläuft durch das Betätigungsgehäuse 11 und ist in dem Betätigungsgehäuse 11 des Betätigungsknopfs 10 mittels eines Kugellagers 21 gegenüber dem Grundkörper 2 drehbar gelagert. Auf die Lagerachse 4 ist das Sperrelement 8 aufgeschoben, das gegenüber der Lagerachse 4 drehbar ist und gegenüber dem Grundkörper 2 drehfest ist. Das Sperrelement 8 umfasst einen ersten Abschnitt 22 und einen zweiten Abschnitt 23, wobei der erste Abschnitt 22 ringförmig ausgebildet ist und an dem ersten Abschnitt 22 radial abstehende Blockadebereiche 24 angeordnet sind, und der erste Abschnitt 22 koaxial den zweiten Abschnitt 23 umgibt, der als Führungshülse für die Lagerachse 4 ausgebildet ist, wobei radiale Streben 25 den ersten Abschnitt 22 und den zweiten Abschnitt 23 drehfest miteinander verbinden. Die Blockadebereiche 24 sind dafür eingerichtet, in der Sperrstellung mit Angriffsbereichen (nicht dargestellt) des Schwenkarms 3 zu wechselwirken. Der Schwenkarm 3 kann in der Sperrstellung des Sperrelements nicht verschwenkt werden, weil das Sperrelement 8 in der Führungsaussparung 15 durch den Anschlag nicht nur parallel zur Lagerachse in der Translation begrenzt, sondern auch lateral gegen ein Ausweichen aus der Führungsaussparung 15 festgelegt ist, und das Schwenken des Schwenkarms 3 durch die Blockadebereiche 24 am Sperrelement 8 unterbunden wird.

Zwischen Sperrelement 8 und Betätigungsgehäuse 11 ist das elastische Element 9 angeordnet. Es ist an einem ersten Ende 26 am Betätigungsgehäuse 11 abgestützt. An einem zweiten Ende 27 ist es an den radialen Streben 25 des Sperrelements 8 abgestützt. Das elastische Element 9 ist so eingerichtet, dass es unter mechanischer Spannung steht, solange der Betätigungsknopf 10 nicht betätigt wird. Sobald ein Benutzer den Betätigungsknopf 10 linear in das Betätigungsgehäuse 11 translatiert, wird die in dem elastischen Element 9 gespeicherte Kraft freigesetzt, wodurch sich das elastische Element 9 axial ausdehnt und das Sperrelement 8 verlagert, bis diese die maximale Translationsstrecke durchlaufen hat und der Anschlag 13 eine weitere Translation verhindert. Dann befindet sich das Sperrelement 8 in der Sperrstellung. Die Lagerachse 4 wird an ihrem zweiten Ende 6 von dem Kraftübertragungsmittel 7 abgeschlossen, das die Schwenkbewegung des Schwenkarms 3 mittels der Kraft, die die Lagerachse 4 überträgt, unterstützt.

Ein Küchengerät mit einem derart konstruierten Kraftübertragungszug kann eine Vielzahl von Vorteilen ermöglichen. Das Sperrelement kann einfach, preisgünstig, leicht bedienbar und gleichzeitig wirkungsvoll konstruiert sein. Das Kraftübertragungsmittel der Lagerachse kann durch seine Abmessungen im Vergleich zu einem einfachen Ende der Lagerachse Kraft viel effizienter auf den Schwenkarm übertragen. Das Sperrelement kann ein Schwenken des Schwenkarms wirkungsvoll unterbinden, sofern der Benutzer dies wünscht und ist durch den Betätigungsknopf leicht auszulösen. Das elastische Element sorgt für ausreichend Kraft, um das Sperrmittel in die Sperrstellung zu verlagern. Durch den Anschlag kann erreicht werden, dass das Sperrmittel immer ausreichend weit in Richtung des Schwenkarms translatiert wird, um seine Wirkung zu erzielen. Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Küchengerät
- 2: Grundkörper
- 3: Schwenkarm
- 4: Lagerachse
- 5: Erstes Ende der Lagerachse
- 6: Zweites Ende der Lagerachse
- 7: Kraftübertragungsmittel
- 8: Sperrelement
- 9: Elastisches Element
- 10: Betätigungsknopf
- 11: Betätigungsgehäuse
- 12: Schraube
- 13: Anschlag
- 14: Verbindungssteg
- 15: Führungsaussparung
- 16: Erster Hebelarm
- 17: Hülse
- 18: Spannring
- 19: Zweiter Hebelarm
- 20: Haken
- 21: Kugellager
- 22: Erster Abschnitt
- 23: Zweiter Abschnitt
- 24: Blockadebereich
- 25: Strebe
- 26: Erstes Ende des elastischen Elements
- 27: Zweites Ende des elastischen Elements

## Patentansprüche

1. Küchengerät (1) mit einem Grundkörper (2), einem Schwenkarm (3), der über eine Lagerachse (4) schwenkbar am Grundkörper (2) angelenkt ist, und einer Sicherungseinrichtung, die dafür eingerichtet ist, ein Schwenken des Schwenkarms (3) relativ zum Grundkörper (2) zu unterbinden, wobei ein Sperrelement (8) als Bestandteil der Sicherungseinrichtung entlang der Lagerachse (4) translatierbar ist, und wobei seitens des Grundkörpers (2) ein Betätigungsknopf (10) zum Betätigen des Sperrelements (8) vorgesehen ist,
**dadurch gekennzeichnet, dass**
der Betätigungsknopf (10) eingerichtet ist, durch Betätigen das Sperrelement (8) ruckartig aus einer Schwenkstellung auszulösen, wodurch das Sperrelement in eine Sperrstellung entlang der Lagerachse (4) in Richtung des Schwenkarms (3) translatiert wird, wobei das Sperrelement (8) einen Anschlag (13) aufweist, um eine maximale Translationsstrecke des Sperrelements (8) zu begrenzen.

2. Küchengerät (1) nach Anspruch 1,
**dadurch gekennzeichnet, dass**
das Sperrelement (8) die Lagerachse (4) abschnittsweise koaxial umgibt.

3. Küchengerät (1) nach einem der Ansprüche 1 oder 2,
**dadurch gekennzeichnet, dass**
das Sperrelement (8) an der Lagerachse (4) des Schwenkarms (3) gelagert ist.

4. Küchengerät (1) nach einem der vorhergehenden Ansprüche,
**dadurch gekennzeichnet, dass**
das Sperrelement (8) durch ein elastisches Element (9) vorgespannt ist.

5. Küchengerät (1) nach Anspruch 4,
**dadurch gekennzeichnet, dass**
das elastische Element (9) eine Schraubenfeder ist, die die Lagerachse (4) und das Sperrelement (8) jeweils abschnittsweise koaxial umgibt.

6. Küchengerät (1) nach einem der vorhergehenden Ansprüche,
**dadurch gekennzeichnet, dass**
der Anschlag (13) mit einer Führungsaussparung (15) wechselwirkt, die seitens des Grundkörpers (2) vorgesehen ist.

7. Küchengerät (1) nach einem der vorhergehenden Ansprüche,
**dadurch gekennzeichnet, dass**
der Betätigungsknopf (10) auf das Sperrelement (8) mittels einer linearen Translation einwirkt.

8. Küchengerät (1) nach einem der vorhergehenden Ansprüche,
**dadurch gekennzeichnet, dass**
der Betätigungsknopf (10) in einem Betätigungsgehäuse (11) angeordnet ist, durch das die Lagerachse (4) verläuft.

9. Küchengerät (1) nach einem der vorhergehenden Ansprüche,
**dadurch gekennzeichnet, dass**
die Lagerachse (4) in einem Kugellager (21) gegenüber dem Grundkörper (2) drehbar gelagert ist.

10. Küchengerät (1) nach einem der vorhergehenden Ansprüche
**dadurch gekennzeichnet, dass**
dass das Sperrelement (8) einen oder mehrere Blockadebereiche (24) aufweist, die dafür eingerichtet sind, in einer Sperrstellung mit Angriffsbereichen des Schwenkarms (3) zu wechselwirken.

11. Küchengerät (1) nach einem der vorhergehenden Ansprüche,
**dadurch gekennzeichnet, dass**
das Sperrelement (8) einen ersten Abschnitt (22) und einen zweiten Abschnitt (23) umfasst, wobei der erste Abschnitt (22) ringförmig ausgebildet ist und an dem ersten Abschnitt (22) radial abstehende Blockadebereiche (24) angeordnet sind, und der erste Abschnitt (22) koaxial den zweiten Abschnitt (23) umgibt, der als Führungshülse für die Lagerachse (4) ausgebildet ist, wobei radiale Streben (25) den ersten Abschnitt (22) und den zweiten Abschnitt (23) drehfest miteinander verbinden.

12. Küchengerät (1) nach einem der vorhergehenden Ansprüche,
**dadurch gekennzeichnet, dass**
an der Lagerachse (4) eine Hebeleinrichtung angeordnet ist, die dafür eingerichtet ist, eine Schwenkbewegung des Schwenkarms (3) zu unterstützen.

13. Küchengerät (1) nach einem der vorhergehenden Ansprüche,
**dadurch gekennzeichnet, dass**
an der Lagerachse (4) ein im Wesentlichen stabförmiges Kraftübertragungsmittel (7) angeordnet ist, um eine Kraft auf den Schwenkarm (3) zu übertragen.

## Claims

1. Kitchen appliance (1) comprising a base body (2), a pivoting arm (3) which is pivotably articulated on the base body (2) via a bearing pin (4), and a safety device which is designed to prevent a pivoting of the pivoting arm (3) relative to the base body (2), wherein a locking element (8) is able to be translated along the bearing pin (4) as a component of the safety device, and wherein an actuating knob (10) is provided on the base body (2) for actuating the locking element (8),
**characterised in that**
the actuating knob (10), when actuated, is designed to release the locking element (8) abruptly from a pivoted position, whereby the locking element is translated into a locked position along the bearing pin (4) in the direction of the pivoting arm (3), wherein the locking element (8) comprises a stop (13) in order to limit a maximum translation path of the locking element (8).

2. Kitchen appliance (1) according to claim 1,
**characterised in that**
the locking element (8) partially coaxially surrounds the bearing pin (4).

3. Kitchen appliance (1) according to one of claims 1 or 2,
**characterised in that**
the locking element (8) is mounted on the bearing pin (4) of the pivoting arm (3).

4. Kitchen appliance (1) according to one of the preceding claims,
**characterised in that**
the locking element (8) is pretensioned by a resilient element (9).

5. Kitchen appliance (1) according to claim 4,
**characterised in that**
the resilient element (9) is a helical spring which in each case partially coaxially surrounds the bearing pin (4) and the locking element (8).

6. Kitchen appliance (1) according to one of the preceding claims,
**characterised in that**
the stop (13) cooperates with a guide recess (15) which is provided on the base body (2).

7. Kitchen appliance (1) according to one of the preceding claims,
**characterised in that**
the actuating knob (10) acts on the locking element (8) by means of a linear translation.

8. Kitchen appliance (1) according to one of the preceding claims,
**characterised in that**
the actuating knob (10) is arranged in an actuating housing (11), the bearing pin (4) extending therethrough.

9. Kitchen appliance (1) according to one of the preceding claims,
**characterised in that**
the bearing pin (4) is rotatably mounted in a ball bearing (21) relative to the base body (2).

10. Kitchen appliance (1) according to one of the preceding claims,
**characterised in that**
the locking element (8) comprises one or more blocking regions (24) which are designed to cooperate in a locked position with working regions of the pivoting arm (3).

11. Kitchen appliance (1) according to one of the preceding claims,
**characterised in that**
the locking element (8) comprises a first portion (22) and a second portion (23), wherein the first portion (22) is of annular configuration and radially protruding blocking regions (24) are arranged on the first portion (22), and the first portion (22) coaxially surrounds the second portion (23) which is configured as a guide sleeve for the bearing pin (4), wherein radial struts (25) connect together the first portion (22) and the second portion (23) fixedly in terms of rotation.

12. Kitchen appliance (1) according to one of the preceding claims,
**characterised in that**
a lever device is arranged on the bearing pin (4), said lever device being designed to assist a pivoting movement of the pivoting arm (3).

13. Kitchen appliance (1) according to one of the preceding claims,
**characterised in that**
a substantially bar-shaped force transmission means (7) is arranged on the bearing pin (4) in order to transmit a force to the pivoting arm (3).

## Revendications

1. Ustensile de cuisine (1) comprenant un corps de base (2), un bras pivotant (3), qui est articulé de manière pivotante sur le corps de base (2) par l'intermédiaire d'un axe de palier (4), et un dispositif de blocage qui est agencé pour empêcher un pivotement du bras de pivotement (3) par rapport au corps de base (2), un élément de blocage (8), en tant que composant du dispositif de blocage, pouvant effectuer un mouvement translatoire le long de l'axe de palier (4), et un bouton d'actionnement (10) destiné à actionner l'élément de blocage (8) étant ménagé du côté du corps de base (2),
**caractérisé en ce que**
le bouton d'actionnement (10) est agencé pour déclencher, par actionnement, l'élément de blocage (8) par à-coup à partir d'une position de pivotement, sur quoi l'élément de blocage effectue un mouvement translatoire le long de l'axe de palier (4) en direction du bras de pivotement (3) pour arriver dans une position de blocage, l'élément de blocage (8) présentant une butée (13) afin de limiter une trajectoire de translation maximale de l'élément de blocage (8).

2. Ustensile de cuisine (1) selon la revendication 1,
**caractérisé en ce que**
l'élément de blocage (8) entoure l'axe de palier (4) en partie de manière coaxiale.

3. Ustensile de cuisine (1) selon la revendication 1 ou 2,
**caractérisé en ce que**
l'élément de blocage (8) est logé sur l'axe de palier (4) du bras de pivotement (3).

4. Ustensile de cuisine (1) selon l'une quelconque des revendications précédentes,
**caractérisé en ce que**
l'élément de blocage (8) est précontraint par un élément élastique (9).

5. Ustensile de cuisine (1) selon la revendication 4,
**caractérisé en ce que**
l'élément élastique (9) est un ressort hélicoïdal qui entoure l'axe de palier (4) et l'élément de blocage (8) respectivement en partie de manière coaxiale.

6. Ustensile de cuisine (1) selon l'une quelconque des revendications précédentes,
**caractérisé en ce que**
la butée (13) coopère avec un évidement de guidage (15) qui est ménagé du côté du corps de base (2).

7. Ustensile de cuisine (1) selon l'une quelconque des revendications précédentes,
**caractérisé en ce que**
le bouton d'actionnement (10) agit sur l'élément de blocage (8) au moyen d'une translation linéaire.

8. Ustensile de cuisine (1) selon l'une quelconque des revendications précédentes, **caractérisé en ce que** le bouton d'actionnement (10) est disposé dans un boîtier d'actionnement (11), à travers lequel passe l'axe de palier (4).

9. Ustensile de cuisine (1) selon l'une quelconque des revendications précédentes,
**caractérisé en ce que**
l'axe de palier (4) est logé de manière rotative dans un palier à billes (21) en face du corps de base (2).

10. Ustensile de cuisine (1) selon l'une quelconque des revendications précédentes,
**caractérisé en ce que**
l'élément de blocage (8) présente une ou plusieurs zones de blocage (24) qui sont agencées pour coopérer, dans une position de blocage, avec des zones de prise du bras pivotant (3).

11. Ustensile de cuisine (1) selon l'une quelconque des revendications précédentes,
**caractérisé en ce que**
l'élément de blocage (8) comprend une première section (22) et une deuxième section (23), la première section (22) étant réalisée de manière annulaire, et des zones de blocage (24) radialement en saillie étant disposées sur la première section (22), et la première section (22) entourant la deuxième section (23) de manière coaxiale, laquelle deuxième section est réalisée comme douille de guidage pour l'axe de palier (4), des nervures radiales (25) reliant entre elles la première section (22) et la deuxième section (23) de manière solidaire.

12. Ustensile de cuisine (1) selon l'une quelconque des revendications précédentes,
**caractérisé en ce qu'**
un dispositif de levier est disposé sur l'axe de palier (4), lequel dispositif de levier est agencé pour soutenir un mouvement de pivotement du bras pivotant (3).

13. Ustensile de cuisine (1) selon l'une quelconque des revendications précédentes,
**caractérisé en ce qu'**
un moyen de transmission de force (7) essentiellement en forme de barre est disposé sur l'axe de palier (4) afin de transmettre une force sur le bras pivotant (3).
